# EUROPEAN PATENT APPLICATION

(11) **EP 3 059 603 A1**
(43) Date of publication of application: **24.08.2016**
(21) Application number: 16154970.4
(22) Date of filing: 10.02.2016
(51) Int. Cl.: G01S 3/14, G01S 19/53, G01S 3/46, H01Q 1/12, H01Q 1/24

(54) **ANTENNA AZIMUTH ALIGNMENT MONITOR**

(30) Priority: 18.02.2015 US 201514624839
(71) Applicant: CommScope Technologies LLC, Hickory, NC 28602 (US)
(72) Inventor: Balter, Zoya, Plano, TX 75024 (US); Kurk, Morgan C, Sachse, TX 75048 (US); Michaelis, Scott Lynn, Plano, TX 75075 (US)
(74) Representative: Bohnenberger, Johannes

(57) **Abstract**

Apparatus for monitoring an alignment of a base station antenna at a cell site. The apparatus may include an alignment monitor configured to be attached to an antenna mounting bracket for mounting the base station antenna to a support structure. The alignment monitor may include GPS antenna pointing in a direction different than an azimuth pointing direction of the base station antenna.

## Description

### BACKGROUND

Various aspects of the present disclosure relate to base station antennae, and, more particularly, to apparatus for setting and monitoring an azimuth alignment of base station antennae at a cell site.

In order to provide full and continuous coverage within each cell of a wireless communication system, proper alignment of each individual antenna is essential. A great deal of time and money is spent in developing and optimizing wireless networks to accommodate increased subscriber traffic and for the deployment of new radio access technologies. Because a wireless communication system operates in a cellular layout, each individual antenna is responsible for not only providing good coverage when transmitting information to and receiving information from devices within their respective sector within the cell, but also for not interfering with communication in other sectors. Errors in correctly pointing a base station antenna may reduce the signal strength or coverage of a sector by a corresponding base station antenna while causing excessive interference in an adjacent sector. This has become particularly more important with new encoding technologies that have emerged with the latest wireless standards.

In recent years, advances in antenna technology have made it possible to adjust a beam's pointing direction electronically, that is, the boresite and tilt of the beam may be adjusted within a certain range without physically moving an antenna housing and reflector.

These and other advances have made it advantageous to have an antenna alignment monitor capable of accurately monitoring an alignment of various physical sizes and shapes of antenna structures such as base station antenna, without significant customization.

### SUMMARY OF THE DISCLOSURE

Various embodiments of the present disclosure may be directed to apparatus and methods for monitoring an alignment of a base station antenna mounted to a support structure at a cell site. In one embodiment, an apparatus may include at least two GPS antennae attached to amounting bracket connecting the base station antenna to the support structure, an azimuth determination module communicably coupled to the at least two GPS antennae, and a display communicably coupled to the azimuth determination module. The at least two GPS antennae may be configured to receive GPS satellite signals, and may point in a direction having a predetermined correlation to a pointing direction of the base station antenna. The azimuth determination module may obtain one or more signal characteristics of the received GPS satellite signals. Based on the one or more obtained signal characteristics, the azimuth determination module may determine a GPS antennae pointing direction of the at least two GPS antennae. Based on the predetermined correlation, the azimuth determination module may determine an azimuth pointing direction of the base station antenna. The display may visually depict an azimuth pointing direction of the base station antenna to which it is attached

### BRIEF DESCRIPTION OF THE SEVERAL VIEWS OF THE DRAWINGS

The following detailed description of the disclosure will be better understood when read in conjunction with the appended drawings. For the purpose of illustrating the disclosure, there are shown in the drawings embodiments that are presently preferred. It should be understood, however, that the disclosure is not limited to the precise arrangements and instrumentalities shown.

In the drawings:
Fig. 1 is a plan view of a cell site having base station antennae with respective theoretical azimuth pointing directions;
Fig. 2 is a perspective view of an alignment monitor to be attached to a bottom antenna mounting bracket connecting the base station to a support structure, according to an embodiment of the present disclosure;
Fig. 3 is a perspective view of an alignment monitor attached to the bottom antenna mounting bracket of Fig. 2, according to an embodiment of the present disclosure;
Fig. 4 is a side view of an alignment monitor attached to the bottom antenna mounting bracket connected to a support structure, according to an embodiment of the present disclosure;
Fig. 5 is a block diagram of various components of a controller box of an alignment monitor, according to an embodiment of the present disclosure;
Fig. 6 is a perspective view showing an example of an alignment monitor to be attached to a bottom antenna mounting bracket different than the bottom antenna mounting bracket described in connection with Figs. 2-4, according to an embodiment of the present disclosure;
Fig. 7 is a perspective view of an alignment monitor attached to the bottom antenna mounting bracket of Fig. 6, according to an embodiment of the present disclosure;
Fig. 8 is a perspective view of an alignment monitor attached to a top antenna mounting bracket, according to an embodiment of the present disclosure;
Fig. 9 is a side view of an alignment monitor attached to the top antenna mounting bracket of Fig. 8, connected to a support structure, according to an embodiment of the present disclosure;
Fig. 10 is a perspective view showing an example of an alignment monitor to be attached to a top antenna mounting bracket different than the top antenna mounting bracket described in connection with Figs. 8 and 9, according to an embodiment of the present disclosure;
Fig. 11 is a side view of an alignment monitor attached to the top antenna mounting bracket of Fig. 10, connected to a support structure, according to an embodiment of the present disclosure; and
Fig. 12 is a flow chart illustrating a method for monitoring an alignment of an azimuth pointing direction of a base station antenna, according to an embodiment of the present disclosure.

### DETAILED DESCRIPTION OF VARIOUS EMBODIMENTS

Certain terminology is used in the following description for convenience only and is not limiting. The words "lower," "bottom," "upper" and "top" designate directions in the drawings to which reference is made. Unless specifically set forth herein, the terms "a," "an" and "the" are not limited to one element, but instead should be read as meaning "at least one." The terminology includes the words noted above, derivatives thereof and words of similar import. It should also be understood that the terms "about," "approximately," "generally," "substantially" and like terms, used herein when referring to a dimension or characteristic of a component of the disclosure, indicate that the described dimension/characteristic is not a strict boundary or parameter and does not exclude minor variations therefrom that are functionally similar. At a minimum, such references that include a numerical parameter would include variations that, using mathematical and industrial principles accepted in the art (e.g., rounding, measurement or other systematic errors, manufacturing tolerances, etc.), would not vary the least significant digit.

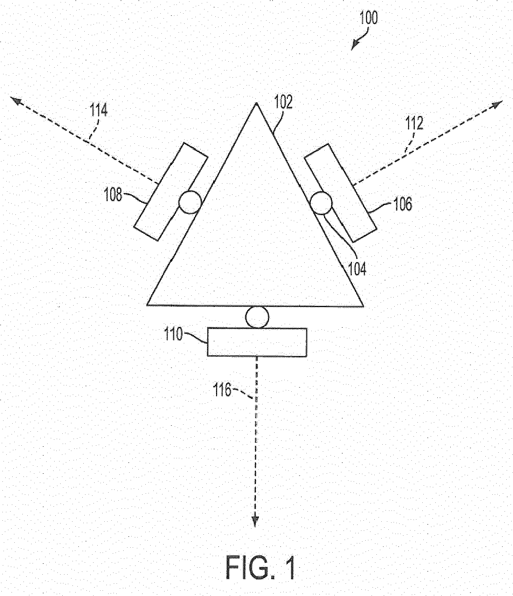

Fig. 1 is a plan view of a typical cell site 100. The cell site 100 may comprise a triangular platform 102, which may be mounted atop an antenna tower (not shown), or other suitable structure, such as a building (not shown) by attachment to a pole, mast, or other supporting structure 104. The platform 102 may include a first side, a second side, and a third side, each of which may have one or more base station antennae 106, 108, and 110, each of which are aimed along azimuth pointing directions 112, 114 ,and 116, respectively. Each may be separated by 120 degrees and are designed to transmit and receive information within a sector in front of the respective base station antennae 106, 108, and 110. Even though only three sectors and three base station antennae are illustrated, it is understood that a cell site may contain any number of sectors and any number of base station antennae, each having an antenna beam covering any degree range.

In order to provide full and continuous coverage within each cell of a wireless communication system, proper alignment of each individual antenna is desirable. A great deal of time and money is spent in developing and optimizing wireless networks to accommodate increased subscriber traffic, and for the deployment of new radio access technologies. A wireless communication system operates in a sectorized layout, where each individual antenna is responsible for transmitting information to, and receiving information from, customers within its respective cell. It is contemplated that, in future configurations, each individual antenna may also be capable of relaying information from cell site to cell site. Errors in correctly pointing a base station antenna may reduce the signal strength or coverage of a sector by a corresponding base station antenna, while causing excessive interference in an adjacent sector.

Several alignment tools exist today to facilitate the alignment of a base station antenna, one of which employs the use of a magnetic compass. More specifically, an engineer typically determines the direction of a proper azimuth, and a technician aligns the antenna according to the reading of the compass essentially so that the antenna beam points along the compass heading matching the designated azimuth. The use of a compass to align the antenna can oftentimes result in inaccuracies because the antenna is typically mounted at the top of a steel tower or structure that can cause significant interference with the magnetic reading of the compass.

Other alignment tools employ the use of global positioning system (GPS) receiver systems. More specifically, one or more GPS antennae are attached on top or in front of a base station antenna in the pointing direction of the base station antenna. Based on signals received from GPS satellites, the alignment tool determines the azimuth pointing direction of the GPS antenna, which is also the azimuth pointing direction of the base station antenna.

Due at least in part to the large variation of base station antenna types, shapes, and sizes, implementation and operation of such conventional alignment tools can be burdensome and costly. For example, because of the various shapes and sizes, for secure attachment, the alignment tool oftentimes needs to be customized (e.g., specifically manufactured) for each differing type, shape, and size of base station antenna. Even still, conventional alignment tools are crudely attached to the base station antenna, such as through the use of bungee cords, feet with adjustable screws or other unstable means. Many of these mounting mechanisms rely on the rigidity of the antenna housing to secure the alignment tool. Such antenna housing often compresses or otherwise deforms when attempting to secure a rigid structure to it. These deformities can lead to inaccurate azimuth readings.

Even with the large number of types of base station antenna housings, only a small number of types of brackets are frequently used to mount the numerous base station antenna types, shapes, and sizes. As such, embodiments of the present disclosure take advantage of the significantly smaller variation among bracket types, by being directed to an azimuth alignment monitor capable of being attached to an antenna mounting bracket (such as for mounting the antenna to a support structure) instead of the base station antenna itself.

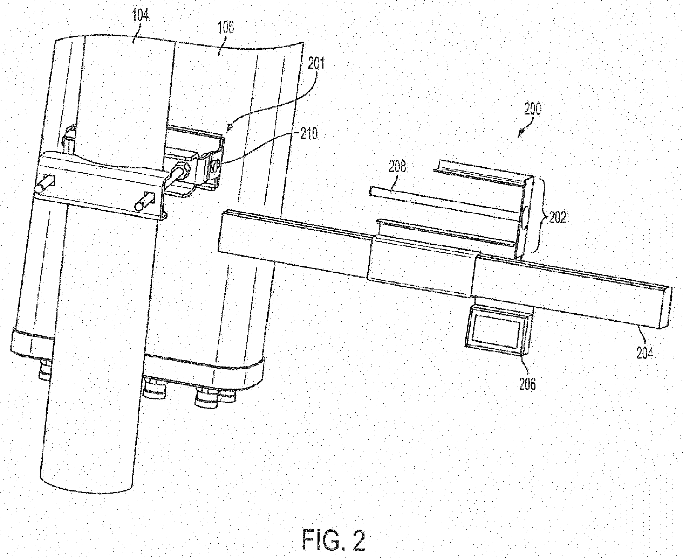

According to embodiments of the present disclosure, Fig. 2 depicts a perspective view of the alignment monitor 200 configured to be attached to a bottom antenna mounting bracket 201 for securing at least a lower portion of the base station antenna 106 to a support structure 104. The alignment monitor 200 may include a bracket connector assembly 202 mounted on an enclosure 204 housing at least two GPS antennae (not shown in Figure 2). The enclosure 204 may be made from an aluminum or other rigid material as known in the art, capable of housing GPS antennae, and may be covered in a plastic, or other rigid material. A controller box 206 may be communicably coupled to the housed GPS antennae, through the enclosure 204. The controller box 206 may have electronic components for determination and display of an azimuth pointing direction of the base station antenna 106.

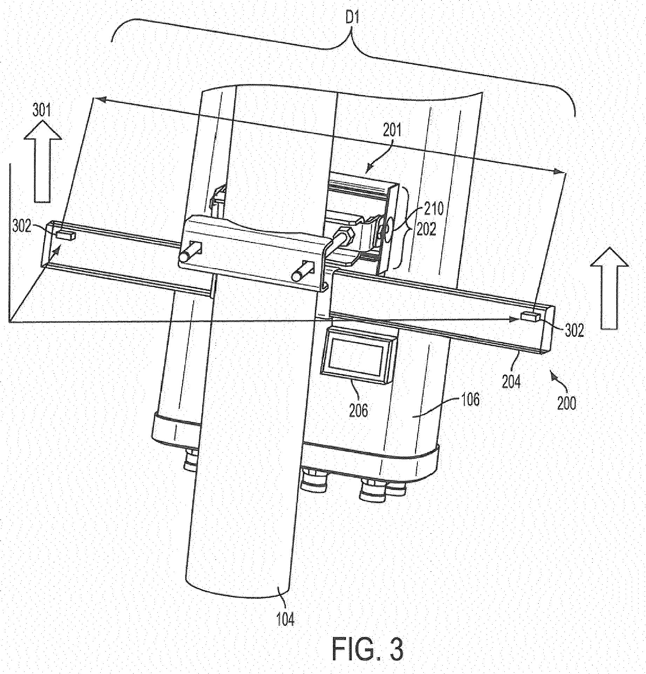

The bracket connector assembly 202 may include a pin 208 configured to be slidably engaged in each of apertures 210 of the antenna mounting bracket 201. Upon engagement with each of the apertures 210, the alignment monitor 200 may be attached to the antenna mounting bracket 201 as shown in Fig. 3.

As discussed above, typically, alignment monitor tools employing GPS antennae are placed in front, or on top of, a base station antenna. Consequently, the GPS antennae lie on a line having a normal vector approximately parallel to the azimuth pointing direction of the base station antenna. According to an embodiment of the present disclosure, the alignment monitor 200 may include GPS antennae arranged in a different fashion. Such an arrangement is shown in the perspective view of GPS antennae 302 within the enclosure 204 in the alignment monitor 200 in Fig. 3. The GPS antennae 302 may be positioned at opposing ends of the enclosure 204. The GPS antennae 302 may be spaced apart at a distance of D1, which may preferably be approximately 550 mm; however, other spacing distances may be employed in still keeping with the spirit of the disclosure.

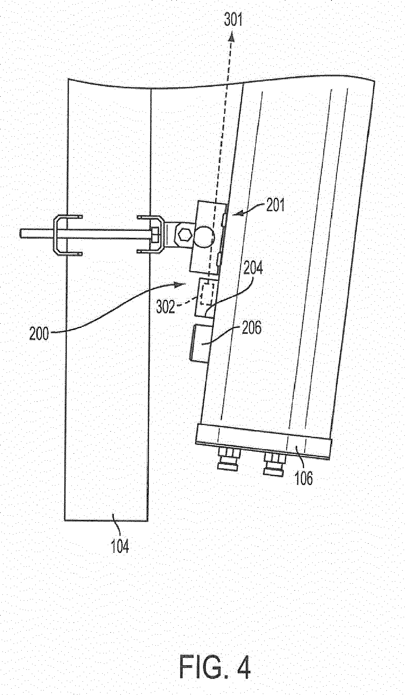

As shown, the placement of the monitor 200 may be such that the GPS antennae 302 lie on a line (defined herein as a bracketline) having a normal vector 301 approximately perpendicular to an azimuth pointing direction of the base station antenna 106. As such, upon determination of the azimuth direction of the normal vector 301 of the bracketline (e.g., the pointing direction of the GPS antennae 302), the pointing direction of the base station antenna 106 can be determined by accounting for a predetermined correlation between a pointing direction of the GPS antennae 302 and a pointing direction of the base station antenna 106 (for example, by adjusting the pointing direction of the GPS antenna 302 by 90°). Fig. 4 illustrates a side view of such an arrangement.

The GPS antennae 302 may be positioned in the monitor 200 (e.g., at a top surface), in a direction of a core assembly plane of the base station antenna 106 to which it is coupled. As such, the GPS antennae 302 may be positioned between the support structure 104 and the base station antenna 106. Consequently, the GPS antennae 302 may not have as clear of a view of the sky as GPS antennae employed in alignment monitors known in the art. However, a view of the GPS antennae 302 may nonetheless be sufficient to gather satellite signals to an acceptable level of accuracy.

It should be noted that the core assembly plane of the base station antenna 106 may be in different positions as well. Because the GPS antennae 302 lie in the core assembly plane of the base station antenna 106, a different predetermined correlation may result between the pointing direction of the GPS antennae 302 and the pointing direction of the base station antenna 106. As such, a pointing direction of the base station antenna 106 may be determined by adjusting the pointing direction of the GPS antennae 302 by angles other than 90°, still in keeping with the spirit of the disclosure. It should be noted that other types of antenna and antenna systems may be employed, as well. For example, the alignment monitor 200 may include one or more antennae capable of receiving other types of satellite signals of other global navigation satellite systems, such as GLONASS, Galileo or Beidou systems, still in keeping with the spirit of the disclosure. Other non-satellite transmitted signals may also be used, such as navigational beacons or known radar locations.

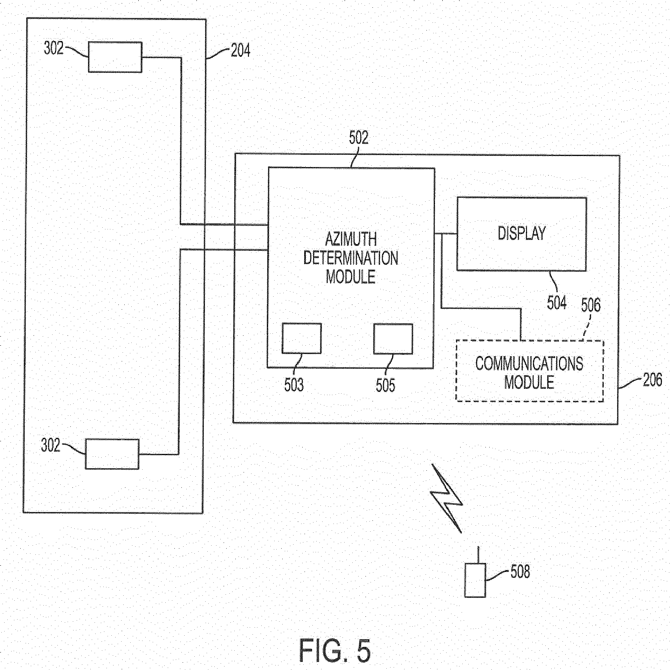

Fig. 5 is a block diagram of the controller box 206 according to an embodiment of the disclosure. It should be appreciated by those of ordinary skill in the art that the various electrical/electronic components and the functions presented herein in Fig. 5, which will hereinafter be described in greater detail, are merely one illustration of the electrical/electronic workings of an embodiment of the present disclosure. Thus, it should be clearly understood that other components may be substituted for any of the components shown in Fig. 5 and that components that perform other functions may alternatively be employed. In other words, the present disclosure is not limited to the precise structure and operation of the electrical/electronic and related components shown in Fig. 5 and as will hereafter be described.

The controller box 206 may include an azimuth determination module 502 and a display 504. The azimuth determination module 502 may be communicably coupled to the GPS antennae 302 located within the enclosure 204, and may include a processor 503 and a memory 505. The memory 505 may be configured to store configuration information and other such setting information related to azimuth pointing direction determinations, which may include one or more of tables, mathematical relationships, and/or other data to relate a pointing direction based on the GPS antennae 302 to a pointing direction of the respective antenna; and may be realized as RAM memory, flash memory, EPROM memory, EEPROM memory, registers, a hard disk, a removable disk, or any other form of storage medium known in the art. The memory 505 may also store executable code configured to cause the processor 503 to implement operations to determine the azimuth direction of the antenna. The azimuth determination module 502 may be configured to receive and process signals from GPS satellites. For example, using signal characteristics (e.g., timing, location and phase information) of the received signals, the azimuth determination module 502 may determine an azimuth pointing direction of the base station antenna to which it is coupled. The display 504 may be configured to provide a visual depiction of the azimuth pointing direction, such as, for example, an azimuth angle in degrees. The display 504 may be in the form of a touch-screen, such that a user can input certain settings or configurations for operation of the monitor 200. Other means of communicating accurate alignment may also be used, such as illuminating a light source when an accurate, predetermined azimuth pointing direction is achieved, or conversely, illuminating light sources that indicate a direction to which the base station antenna may need to be adjusted to achieve a predetermined, correct angle. It should be noted that other techniques of providing feedback to the installer may be possible in keeping with the spirit of the invention.

Optionally, the monitor 200 may allow for the display of azimuth pointing direction information on a smart device 508, such as, for example, remote monitoring. As such, the controller box 206 may also include a communications module 506. The communications module 506 may include a transceiver (not shown) configured to use any wired or wireless communication scheme known to those skilled in the art, including long range and short range communication protocols such as ZIGBEE, IEEE 802.11 Wi-Fi, BLUETOOTH, infrared and the like. Other wireless techniques for transmitting azimuth pointing direction between the monitor and the smart device 508 may be implemented without departing from the scope of this disclosure.

As used herein, a smart device may refer to smart phones, tablets, e-readers, iPads®, mobile gaming consoles, personal computers, MP3 players, iPods® or any other device capable of running one or more software applications. The smart device 508 may provide a graphical user interface (GUI) and/or display for reading the azimuth pointing direction of a base station antenna. Such readings may be integrated with a specific mobile application "app", for use with the monitor according to embodiments of the present disclosure.

Occasionally, due to environmental conditions, such as glare, viewing readings on a smart device or other display may be difficult. As such, the display within the controller box may be configured to display the readings in a simple seven segment multidigit format, for example, or some other easily-readable format.

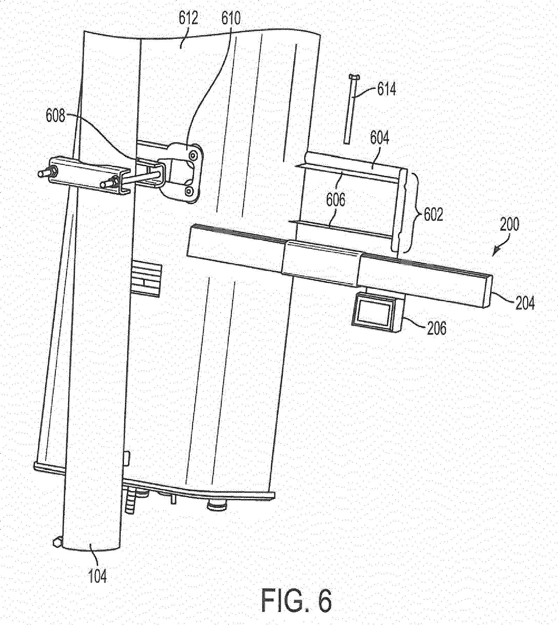

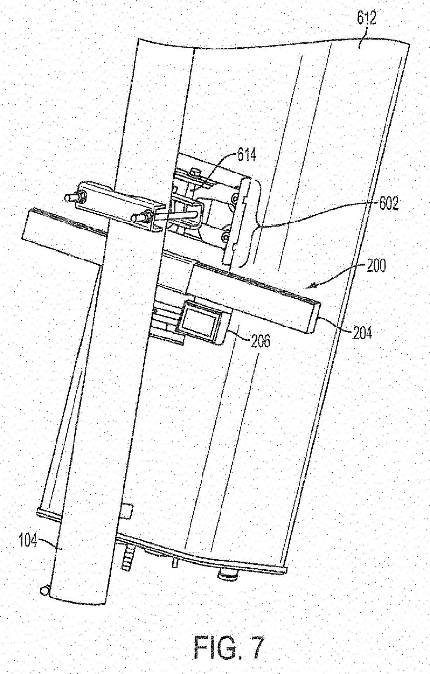

According to embodiments of the present disclosure, the monitor 200 may be configured to be attached to other types of antenna mounting brackets as well. For example, as shown in Fig. 6, the monitor 200 may include a bracket connector assembly 602, which may be different (e.g., in size, shape, and operation) from the bracket assembly 202 described above. Accordingly, the bracket assembly 602 may be used to attach the alignment monitor 200 to other types of base station antenna 612. As shown, the bracket assembly 602 includes a bracket 604 having holes 606 designed to be aligned with one or more holes 608 of the antenna mounting bracket 610 of the base station antenna 612. Such a configuration allows a pin 614 to slidably engage with the aligned holes 606, 608 to secure the monitor 200 with the mounting bracket 610 of the base station antenna 612. Upon engagement with each of the holes 606, 608, the alignment monitor 200 may be attached to the base station antenna 614 on the pole 104 as shown in Fig. 7.

In other embodiments of the disclosure, the monitor 200 may be communicably coupled to one or more Antenna Interface Standards Group ("AISG") controllers (not shown), via a bus (e.g., an AISG compliant bus). The one or more AISG controllers may be positioned proximate, or remote, to the base station antenna. Further, the monitor 200 may be communicably coupled to other electronic components of the base station antenna. These electronic components may include various types of sensors, which may, at least in part, be used to determine other alignment attributes of the base station antenna, and may be calibrated by the monitor 200. For example, the monitor 200 may include one or more accelerometers or gyroscopes (not shown) that can be used to determine downtilt and/or roll of the base station antenna. Details of how the one or more accelerometers may be used to determine the downtilt and/or roll are described in International Application No. PCT/US14/51173 filed August 15, 2014, the disclosure of which is incorporated herein in its entirety.

Information, such as information related to pointing directions discussed hereinthroughout determined by the monitor 200, may be stored in electrical components (such as a memory) inside of the antenna structure for later retrieval.

In other embodiments, the base station antenna (or other antenna structure) may be used for communicating backhaul data, for example, between one or more base stations and a telecommunications network.

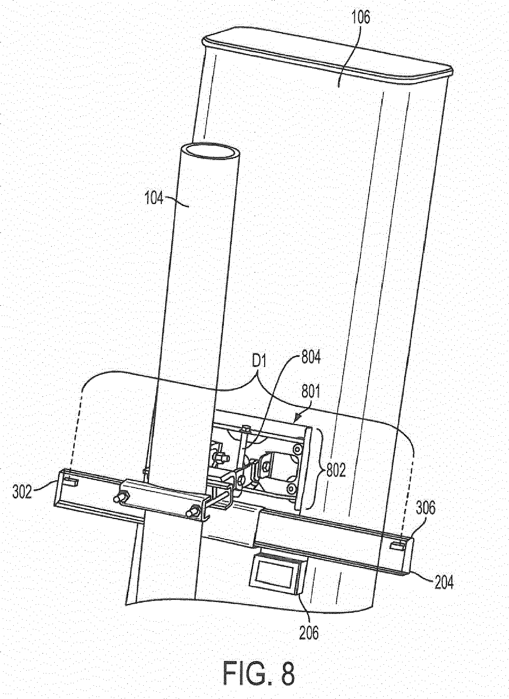

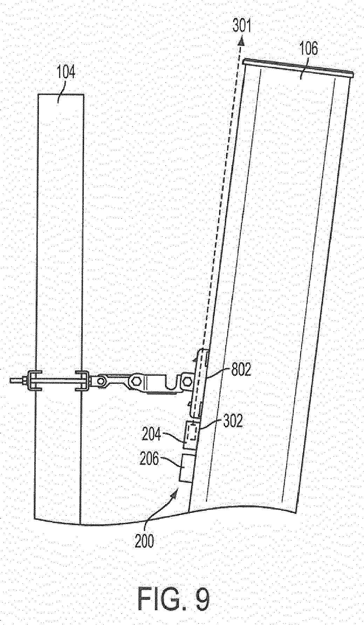

According to other embodiments of the present disclosure, referring now to Fig. 8, the monitor 200 may be connected to a top mounting bracket 801 for securing at least an upper portion of the base station antenna 106 to the support structure 104. The alignment monitor 200 may include a bracket assembly 802 mounted on the enclosure 204 having the at least two GPS antennae 302. The top bracket assembly 802 may include a pin 804 configured to be slidably engaged in one or more apertures (not shown) of the top antenna mounting bracket 801. Similar to the above discussed arrangements, the at least two GPS antennae 302 may be spaced apart at a distance D1, which may preferably be approximately 550 mm. Fig. 9 illustrates a side view of such an arrangement, which shows the vector 301, which, similar to embodiments described above, may be substantially perpendicular to an azimuth pointing direction of the base station antenna 106.

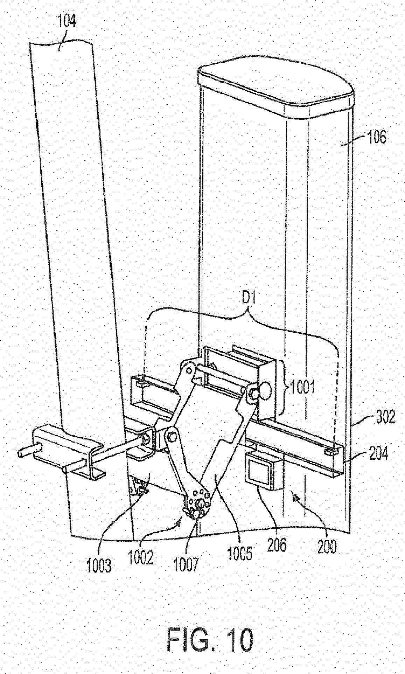

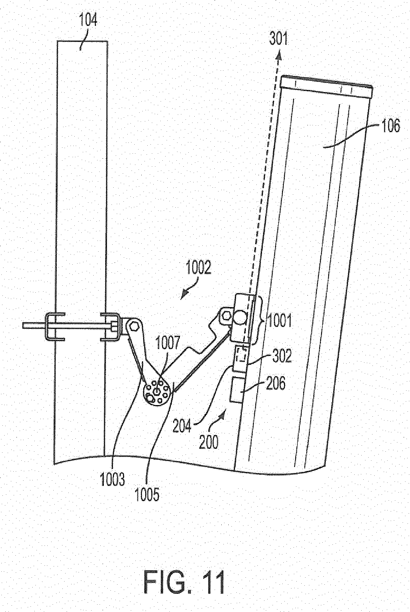

According to yet other embodiments of the present disclosure, the monitor 200 may be configured to be attached to other types of top antenna mounting bracket arrangements as well. For example, as shown in Fig. 10, the monitor 200 may include a bracket assembly 1001, which may be different from the bracket assembly 802 described above. The bracket assembly 1001 may include, or be attached to, a two-legged connector 1002 connecting the base station antenna 106 to the support structure 104. The two-legged connector 1002 may include a first leg 1003 joined to a second leg 1005 at a central pivot 1007. The central pivot 1007 may include a tightener (not shown) for fixing the two legs 1003, 1005 at a desired angle. Fig. 11 is a side view of the configuration showing the vector 301, which, similar to embodiments described above, may be substantially perpendicular to an azimuth pointing direction of the base station antenna 106.

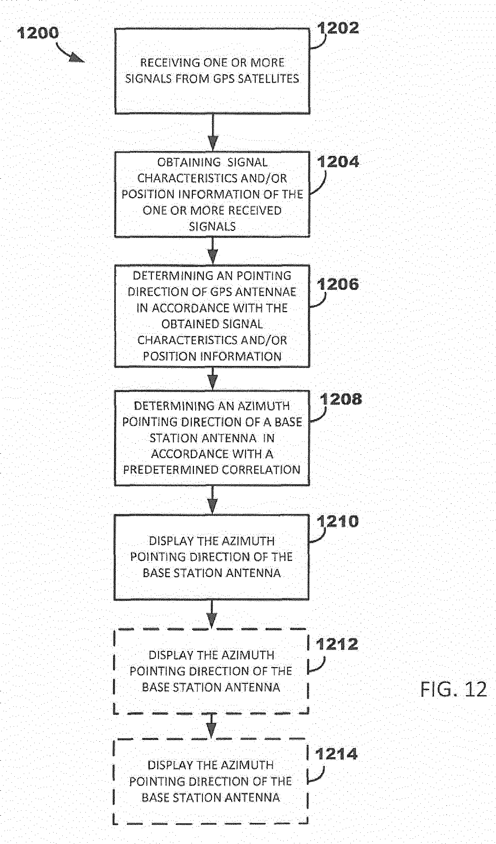

FIG. 12 is a flow chart illustrating a method 1200 for monitoring an alignment of an azimuth pointing direction of a base station antenna. GPS satellites signals may be received by GPS antennae (Block 1202). Signal characteristics and/or position information may then be obtained from the received GPS satellite signals (Block 1204). The signal characteristics may include, but are not limited to, carrier phase, carrier wavelength, and timing information. A pointing direction of the GPS antennae may be determined from one or more of the signal characteristics (Block 1206). Such a determination may be made by calculating the difference in phase between the GPS satellites signals received by each of the at least two GPS antennae, calculating the difference in timing between the GPS satellite signals received by each of the at least two GPS antennae, determining location information of GPS satellites, or any other method as known by those of ordinary skill in the art in light of the present disclosure.

An azimuth pointing direction of the base station antenna may be determined based on a predetermined correlation between the GPS antennae pointing direction and the base station antenna pointing direction (Block 1208). More specifically, as discussed above, the bracketline (formed from a horizontal between the at least two GPS antennae) may have a normal vector (e.g., in a pointing direction of the at least two GPS antennae) in a direction approximately perpendicular to the pointing direction of the base station antenna to which it is coupled. Accordingly, the base station antenna azimuth pointing direction can be determined by accounting for this predetermined correlation (e.g., by adjusting the GPS pointing direction azimuth angle by 90°). The base station antenna azimuth pointing direction may then be displayed (Block 1210).

As described with respect to embodiments of the present disclosure, physical downtilt and azimuth of an antenna structure (e.g., a base station antenna) may be reported or displayed to a user though above described techniques, such as for example, via a smart device 508 or the display 504 of the monitor 200. Further, in light of the specification disclosed hereinthroughout, one may appreciate that electronic downtilt may also be reported. With such physical and electronic antenna structure characteristics (e.g., azimuth, downtilt, and the like), one or more electronic components of the antenna structure and/or the monitor 200, may combine such information (e.g., through the addition of physical and electronic antenna structure characteristics) to report or otherwise display a true beam direction and/or downtilt of the antenna structure to the user.

Accordingly, optionally, at Block 1212, the base station antenna pointing direction may be stored. Also optionally, at Block 1214, the base station antenna pointing direction information may be combined with electronic downtilt/electronic azimuth information to calculate and report a true, or actual, base station antenna pointing direction.

Those of skill in the art would understand that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Those of skill would further appreciate that the various illustrative components, modules (e.g., the azimuth determination module 502), and associated functionality described in connection with the embodiments disclosed herein may be implemented as electronic hardware, computer software, or combinations of both. Skilled artisans may implement the described functionality in varying ways for each particular application, but such implementation decisions should not be interpreted as causing a departure from the scope of the present disclosure.

The various functionality described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

Various embodiments of the disclosure have now been discussed in detail; however, the disclosure should not be understood as being limited to these embodiments. It should also be appreciated that various modifications, adaptations, and alternative embodiments thereof may be made within the scope and spirit of the present disclosure.

## Claims

1. An apparatus for determining an azimuth pointing direction of an antenna structure, the apparatus comprising:
at least two antennae attached to a bracket connecting the antenna structure to a support structure, wherein the at least two antennae receive radio frequency (RF) signals from one or more transmitters at one or more known locations; and
an azimuth determination module communicably coupled to the at least two antennae, the azimuth determination module configured to determine, based at least in part on the received RF signals, the azimuth pointing direction of the antenna structure.

2. The apparatus of claim 1, wherein the one or more transmitters include one or more satellites and the at least two antenna are Geospatial Positioning System (GPS) satellites.

3. The apparatus of claim 1 or claim 2, wherein the antenna structure comprises a base station antenna or an antenna structure is for exchanging backhaul data.

4. The apparatus of claim 1 or claim 2, wherein an azimuth pointing direction of the at least two antennae is different from an azimuth pointing direction of the antenna structure.

5. The apparatus of claim 4, wherein the azimuth determination module is configured to determine the azimuth pointing direction of the antenna structure by applying a known offset angle.

6. The apparatus of any of claims 1-2, 4 or 5, wherein one or more outputs of the azimuth determination module are transmitted to one or more electronic components of the antenna structure.

7. The apparatus of any of claims 1-2, 4 or 5, further comprising a communications module configured to transmit the one or more outputs to one or more electronic devices external to the antenna structure.

8. The apparatus of any of claims 1-2, 4 or 5, wherein the apparatus is configured to enable the azimuth pointing direction to be monitored by a device remote to the antenna structure.

9. The apparatus of any of claim 1-2, 4 or 5, wherein the azimuth determination module is configured to calibrate one or more sensors of the antenna structure.

10. A method for determining an azimuth pointing direction of an antenna structure, the method comprising:
receiving, by at least two antenna attached to a bracket of the antenna structure, radio frequency (RF) signals from one or more transmitters at one or more known locations; and
determining, by an azimuth determination module, the azimuth pointing direction of the antenna structure, based at least in part on the received RF signals.

11. The method of claim 10, further comprising determining an azimuth pointing direction of the at least two antenna.

12. The method of claim 11, wherein determining the azimuth pointing direction of the antenna structure comprises applying a known offset angle to the azimuth pointing direction of the at least two antenna.

13. The method of any of claims 10-12, wherein the azimuth pointing direction of the at least two antennae is different from the azimuth pointing direction of the antenna structure.

14. The method of any of claims 10-12, wherein the at least two antenna are Geospatial Positioning System (GPS) satellites, the method further comprising displaying the azimuth pointing direction of the antenna structure.

15. The method of any of claims 10-12, further comprising:
storing first information associated with the azimuth pointing direction in the antenna structure;
combining the first information with second information associated with an electronic beam steering direction of the antenna structure; and
reporting an actual beam direction of the antenna structure based, at least in part, on the first and second information.
